# EUROPÄISCHE PATENTANMELDUNG

(11) **EP 2 380 692 A1**
(43) Veröffentlichungstag der Anmeldung: **26.10.2011**
(21) Anmeldenummer: 10160833.9
(22) Anmeldetag: 23.04.2010
(51) Int. Cl.: B23K 9/29, B23K 9/32

(54) **Schutzgasfügen- oder -beschichten mit interner Rauchabsaugung**

(71) Anmelder: Dinse G.m.b.H., 22419 Hamburg (DE); Hochschule Lausitz, 01968 Senftenberg (DE)
(72) Erfinder: Zander, Peter, 22844 Norderstedt (DE); Mewes, Christopher, 24568 Kaltenkirchen (DE); Winkelmann, Prof. Dr., 02979 Burg (DE); Amro, Abdelaziz, 01967 Senftenberg (DE)
(74) Vertreter: Raffay & Fleck

(57) **Zusammenfassung**

Offenbart wird eine Vorrichtung zum stoffschlüssigen, thermischen Fügen oder Beschichten von Werkstücken unter Schutzgaseintrag mit einer jedenfalls die Medien Schutzgas und ein aufzuschmelzendes Füge- oder Beschichtungsmaterial zuführenden Medienversorgung und einem Arbeitskopf (1), an dem die Medien austreten und der Bearbeitungsvorgang vollzogen wird und der eine die Austrittsöffnungen der Medien umgebende Ummantelung aufweist (8), sowie einer Absaugung zum Absaugen von während des Bearbeitungsvorganges entstehendem Rauchgas, die sich gegenüber dem Stand der Technik dadurch auszeichnet, dass in dem Arbeitskopf (1) wenigstsn ein an die Absaugung angeschlossener Absaugkanal (14) mit mindestens einer Eintrittsöffnung ausgebildet ist, die innerhalb der Ummantelung (8) angeordnet ist. Mit dieser Umgestaltung wird erreicht, dass bei einem stoffschlüssigen, thermischen Fügen oder Beschichten eine Rauchgasabsaugung zuverlässig am Entstehungsort vorgenommen und so das entstehende Rauchgas vollständig abgeführt werden kann.

Ferner wird ein Verfahren zum stoffschlüssigen, thermischen Fügen oder Beschichten offenbart, bei dem die Absaugung von entstehendem Rauchgas durch den Arbeitskopf hindurch erfolgt.

## Beschreibung

Die Erfindung betrifft ein Verfahren zum stoffschlüssigen, thermischen Fügen oder Beschichten von Werkstücken unter Schutzgaseintrag gemäß dem Oberbegriff des Patentanspruches 1. Sie betrifft ferner eine Vorrichtung zum stoffschlüssigen, thermischen Fügen oder Beschichten von Werkstücken unter Schutzgaseintrag gemäß dem Oberbegriff des Patentanspruches 6. Insbesondere ist hinsichtlich des thermischen stoffschlüssigen Fügens das Schutzgasschweißen und ―löten von Interesse und steht im Fokus, wenngleich auch grundsätzlich andere stoffschlüssige, thermische Füge- und Beschichtungstechniken mit Schutzgaseintrag von der Erfindung betroffen sind.

Beim stoffschlüssigen, thermischen Fügen oder Beschichten von Werkstücken unter Schutzgaseintrag entstehen aufgrund der starken Hitze und der durch den Lichtbogen zum Aufschmelzen des Füge- oder Beschichtungsmaterials eingebrachten Energie verschiedene gasförmige Produkte, die als Rauchgas bezeichnet werden und von der Bearbeitungsstelle abgesaugt werden müssen. Denn das Rauchgas ist gesundheitsschädlich und kann im Falle einer Ansammlung im Bearbeitungsbereich den Füge- oder Beschichtungsvorgang und das Ergebnis in ungewollter Weise beeinflussen.

Bei derzeitigen Verfahren und bei Füge- oder Beschichtungsvorrichtungen nach dem Stand der Technik werden hierfür separat zu dem Arbeitskopf ausgebildete Absaugungen eingesetzt, die an Halterungen angeordnet oder in sonstiger Weise im Bereich der Bearbeitungsstelle bereitgestellt werden. Solche Absaugungen können z.B. an einen Absaugkanal oder -schlauch angeschlossene trichterförmige Absaugöffnungen oder

dgl. sein. Das Schutzgas wird dabei in der Regel über den Arbeitskopf, z.B. einen Fügekopf, zugeführt, typischerweise wird ein innerhalb einer hülsenartigen Abschirmung gelegener Austritt des Füge- oder Beschichtungsmaterials, beispielsweise des Schweißdrahtes, vollständig von Schutzgas umspült, so dass das Schutzgas eine die Bearbeitungsstelle insgesamt umgebende gasförmige Schutzglocke bildet.

Bei dieser Verfahrensweise und konstruktiven Ausgestaltung einer Füge- oder Beschichtungsvorrichtung, insbesondere ihres Arbeitskopfes, bestehen nun zwangsläufig Probleme und Unzulänglichkeiten. So wird durch die separate und externe Absaugung das Rauchgas zwar eingesammelt, allerdings erst außerhalb der eigentlichen Arbeits-, z.B. Fügezone. Aus der Arbeitszone wird das Rauchgas durch abströmendes Schutzgas nach außen gespült, wo es dann idealer Weise zu 100% in die Absaugung geraten soll. Allerdings kann nicht gänzlich ausgeschlossen werden, dass das einmal ausgetretene Rauchgas eben doch nicht von der Absaugung erfasst wird und insoweit in die Umgebung gelangt. Ein solches kann bereits bei geringen Mengen und Konzentrationen des Rauchgases problematisch sein, da schon solche geringen Mengen gesundheitliche Beeinträchtigungen nach sich ziehen können.

Besondere Bedeutung erhält dies beim thermischen Fügen leicht zu sublimierender Werkstoffe, wie insbesondere Magnesium und Zink. Diese beiden Werkstoffe sind extreme Gasbildner, d.h. sie neigen beim thermischen Fügen zu einer starken Bildung von Rauchgasen. Hier insbesondere kann eine vollständige Absaugung der Rauchgase mit externen, separaten Gasabsaugungen nicht gewährleistet werden. Zudem kommt es bei diesen Materialien durch die in hoher Menge entstehenden Gase zu einer negativen Beeinflussung der Lichtbogenstabilität, was den Fügevorgang selbst beeinträchtigen, die Qualität der Fügeverbindung verschlechtern kann.

Durch die bei herkömmlichen thermischen Füge- oder Beschichtungsverfahren dieser Art vorgesehene vollständige Spülung des Inneren des Arbeitskopfes mit Schutzgas ist zunächst die Strömungsrichtung des Schutzgases im Bereich der Bearbeitungsstelle der Richtung abdampfender Mefialidämpfe entgegengerichtet. Mit anderen Worten werden die Metalldämpfe durch das anströmende Schutzgas zunächst zurückgehalten. Somit kann eine vollständige und zügige Entgasung der Bearbeitungsstelle nicht bzw. nur unzureichend erzielt werden, was bei einem Fügevorgang z.B. letztlich zu einer Porenbildung in der Fügenaht führt. Eine solche Porenbildung führt zu einer klaren Festigkeitsminderung der Fügenaht. Diese Porenbildung ist umso stärker zu befürchten, je intensiver die Werkstoffe zur Gasbildung neigen. Aber auch bei Werkstoffen, die in der Gasbildung eher verhalten sind, kann eine Porenbildung mit den bekannten Verfahren und Fügevorrichtungen nicht gänzlich ausgeschlossen werden, da auch dort das anströmende Schutzgas an der Fügestelle ein freies Abdampfen von Metalldämpfen bzw. Rauchgas verhindert.

Ausgehend von diesem Stand der Technik und den oben beschriebenen Problemen ist es Aufgabe der Erfindung, ein Verfahren zum stoffschlüssigen, thermischen Fügen oder Beschichten von Werkstücken der eingangs genannten Art dahingehend weiterzuentwickeln, dass eine Rauchgasabsaugung zuverlässig am Entstehungsort vorgenommen werden kann. Ferner soll eine Füge- oder Beschichtungsvorrichtung der eingangs genannten Art dahingehend weitergebildet werden, dass sie zu einer das Rauchgas bereits am Entstehungsort zuverlässig abführenden Verfahrensweise des stoffschlüssigen, thermischen Fügens oder Beschichtens verwendet werden kann.

Diese Aufgabe wird hinsichtlich des Verfahrens durch ein solches gemäß den Merkmalen des Patentanspruchs 1, im Hinblick auf die Vorrichtung durch eine Vorrichtung mit den Eigenschaften nach Anspruch 6 gelöst. Vorteilhafte Weiterbildungen hinsichtlich des Verfahrens sind in den abhängigen Ansprüchen 2 bis 5, solche der Vorrichtung in den abhängigen Ansprüchen 7 bis 10 angegeben. Der wesentliche Aspekt der Lösung hinsichtlich des Verfahrens besteht darin, dass bei einem Verfahren zum stoffschlüssigen, thermischen Fügen oder Beschichten von Werkstücken unter Schutzgaseintrag, welches mit einem einen Arbeitskopf aufweisenden Füge- oder Beschichtungsgerät durchgeführt wird und bei dem über eine rohrförmige Zuführung, die in dem Arbeitskopf mündet, in den Arbeitskopf ein aufzuschmelzendes Füge- oder Beschichtungsmaterial zugeführt und im Bereich des Arbeitskopfes durch eine Lichtbogenentladung aufgeschmolzen und in eine Fügenaht eingebracht oder auf ein Werkstück aufgebracht wird und bei dem schließlich während des Arbeitsvorganges entstehendes Rauchgas abgesaugt wird, die Absaugung des Rauchgases durch den Arbeitskopf erfolgt, über mindestens einen mit einem Eintritt in dem Arbeitskopf liegenden Absaugkanal.

Auf dem Weg zu dieser erfindungsgemäßen Lösung mussten die Erfinder zunächst sich von der Vorstellung lösen, dass der gesamte Arbeitskopf in seinem Inneren von dem Schutzgas zu durchströmen ist. Denn nur das Lösen von dieser im Stand der Technik verbreiteten und unter den Fachleuten allgemein anerkannten Voraussetzung erlaubte es, eine Absaugung in dem Arbeitskopf münden und damit dort entstehendes Rauchgas unmittelbar am Entstehungsort absaugen zu lassen. Dabei wird nun das entstehende Rauchgas unmittelbar im Bereich des Entstehungsortes abgesaugt, ohne dass dieses zuerst nach außen über den Arbeitskopf hinaus austritt. Dies bedingt, dass im Bereich des Arbeitskopfes nicht allein eine Strömung von Schutzgas in Richtung auf die Bearbeitungsstelle ausgebildet ist, sondern auch eine gegenläufige Strömung, mit der Rauchgas (ggf. auch ein Anteil von Schutzgas) über den Absaugkanal unmittelbar durch den Arbeitskopf abgesaugt wird. Hiermit geht nun zwangsläufig eine Veränderung der Atmosphäre im Bereich der Bearbeitungsstelle einher. Wo diese im Stand der Technik (abgesehen von der Verunreinigung mit Rauchgas) nahezu vollständig durch Schutzgas gebildet ist, wird der Anteil an Schutzgas durch die aktive Absaugung und damit einhergehende erhöhte Konzentration von Rauchgas in diesem Bereich nunmehr in deutlich geringerer Konzentration im unmittelbaren Umfeld der Bearbeitungsstelle vorhanden sein. Eine wesentliche und für die Fachwelt überraschende Erkenntnis liegt nun darin, dass diese Veränderung der Atmosphäre im unmittelbaren Bereich der Bearbeitungsstelle keine negativen Auswirkungen auf den Füge- oder Beschichtungsvorgang selbst hat.

Denn das Schutzgas hat im herkömmlichen Füge- oder Beschichtungsvorgang, wie die Fachwelt weiß, zwei grundsätzliche Aufgaben. Die erste Aufgabe besteht in der Abschirmung der Bearbeitungsstelle gegenüber der Atmosphäre außerhalb des Arbeitskopfes, um hier vor allem den schädigenden Einfluss des Luftsauerstoffes auszuschließen. Die zweite Aufgabe, und daher erwartet die Fachwelt bei einer Veränderung der Atmosphäre im Bereich der Bearbeitungsstelle negative Auswirkungen, besteht in der Bereitstellung von Ionen für die im Lichtbogen stattfindende Energieübertragung auf das Füge- oder Beschichtungsmaterial (z.B. den Schweißdraht) zum Aufschmelzen desselben. Hier haben die Erfinder durch Untersuchungen die überraschende Erkenntnis gewonnen, dass eine bewusste Ausdünnung des Gehaltes an Schutzgas im Bereich der Bearbeitungsstelle, wie sie durch die erfindungsgemäße Lösung der Führung der Absaugung durch den Arbeitskopf selbst entsteht, keine negativen Auswirkungen zeigt, sondern, je nach zu fügendem Material, sogar eine Verbesserung des Energietransportes durch die Zusammensetzung des Rauchgases bewirkt. Die in dem Rauchgas enthaltenen Metallionen eignen sich nämlich besonders gut für die Energieübertragung im Lichtbogen.

Erst durch diese Überlegungen und Erkenntnisse konnten die Erfinder die seit Jahren bewährte und als unumstößlich angenommene Konstruktion einer externen Absaugung überwinden und ein funktionierendes Verfahren gemäß der Erfindung angeben, bei dem die Rauchgasabsaugung durch den Arbeitskopf selbst hindurch erfolgt.

Weitere positive Nebeneffekte der so gestalteten Führung der Rauchgasabsaugung sind, dass insbesondere bei leicht zu sublimierendem, zu fügendem Material (z.B. Magnesium und Zink) die hohen Gasmengen schnell abgeführt und somit eine Porenbildung in der Fügenaht und ein Spritzen von verflüssigtem Fügematerial aufgrund von plötzlich abgasenden Bläschen vermieden werden können. Eine Unterdrückung bzw. jedenfalls deutliche Verminderung der Porenbildung hat dann wieder weitere positive Einflüsse auf die Qualität der Fügeverbindung selbst, die eine verbesserte Festigkeit, Zähigkeit und Sauberkeit der Nahtoberfläche aufweist. Insbesondere der letztgenannte Punkt, nämlich die Sauberkeit der Nahtoberfläche, wirkt sich dann in ggf. sich anschließenden Beschichtungsverfahren positiv aus, wo auf das gefügte Werkstück aufzubringende Beschichtungen besser auch auf der Fügenaht halten, wenn diese eine bessere und sauberere Nahtoberfläche aufweist.

Zur besseren Konzentration der Absaugwirkung in dem durch den Arbeitskopf hindurch geführten Absaugkanal ist es von Vorteil, wenn die rohrförmige Zuführung für das Füge- oder Beschichtungsmaterial zumindest in einem Teilabschnitt als Absaugkanal verwendet wird und/oder wenn die Absaugung des Rauchgases über einen Absaugkanal erfolgt, der jedenfalls teilweise konzentrisch zu der rohrförmigen Zuführung um diese herum gebildet ist. Wenn dies insbesondere für den Eintritt des Absaugkanals und die Mündung der rohrförmigen Zuführung zutrifft, so fallen Absaugung und Zuführung von Füge- oder Beschichtungsmaterial im Bereich der Bearbeitungsstelle nahezu unmittelbar zusammen, so dass eine besonders effektive Absaugung entstehender Rauchgase am Entstehungsort erfolgen und ein Austreten von Rauchgas nach außerhalb des Arbeitskopfes verhindert werden kann.

Einen noch besseren Einschluss des Rauchgases (dabei auch ein Fernhalten der äußeren Atmosphäre von einem Eintritt in den Bereich der Bearbeitungsstelle) erhält man, wenn das Schutzgas über wenigstens einen in den Arbeitskopf mündenden Schutzgaskanal zugeführt wird, dessen Mündungsöffnung sich geschlossen sowohl um die Mündung der rohrförmigen Zuführung als auch um einen Eintritt des Absaugkanals erstreckt. Das Schutzgas bildet so eine geschlossene, beispielsweise ringförmige Wand, gleichermaßen einen Schutzvorhang, um die Bearbeitungsstelle aus, der einen Eintritt der äußeren Atmosphäre in den Bereich der Bearbeitungsstelle bzw. des über dieser liegenden Arbeitskopfes ebenso verhindert wie einen Austritt von Rauchgas nach außen. Diese Vorhangbildung wird noch einmal verbessert, wenn jedenfalls zwei umeinander geführte geschlossene Mündungen eines inneren und eines äußeren Schutzgaskanals vorgesehen sind, aus denen das Schutzgas in einem umlaufenden Bereich um die Mündung der rohrförmigen Zuführung sowie den Eintritt in den Absaugkanal herum ausströmt, wobei das Schutzgas aus einer Mündungsöffnung des äußeren Schutzgaskanals schneller ausströmt als aus einer Mündungsöffnung des inneren Schutzgaskanals. Damit wird einerseits durch den äußeren Schutzgaskanal eine nach außen abströmende und damit den Bereich der Werkstückoberfläche abdichtende Schutzgasglocke ausgebildet, im Bereich des inneren Austrittes wird verhindert, dass zu viel des ausströmenden Schutzgases in die Absaugung gerät und diese so für eintretendes Rauchgas blockiert.

Hinsichtlich der Vorrichtung zum stoffschlüssigen, thermischen Fügen oder Beschichten von Werkstücken unter Schutzgaseintrag, die eine jedenfalls die Medien, Schutzgas und aufzuschmelzendes Füge- bzw. Beschichtungsmaterial zuführenden Medienversorgung sowie einen Arbeitskopf aufweist, in dem die Medien austreten und der Bearbeitungsvorgang vollzogen wird, wobei der Arbeitskopf eine die Austrittsöffnungen der Medien umgebende Ummantelung aufweist und wobei die Vorrichtung eine Absaugung zum Absaugen von während des Bearbeitungsvorganges entstehenden Rauchgas enthält, besteht die erfindungsgemäße Weiterbildung darin, dass in dem Arbeitskopf wenigstens ein an die Absaugung abgeschlossener Absaugkanal mit einer Eintrittsöffnung ausgebildet ist, die innerhalb der Ummantelung angeordnet ist.

Hinsichtlich der Vorteile einer solchen veränderten Vorrichtung und der gedanklichen Schwierigkeiten auf dem Weg einer Umgestaltung ausgehend von bestehenden Vorrichtungen kann auf die oben stehenden Darstellungen zum Verfahren verwiesen werden. Auch hier ist der wesentliche Aspekt der Erfindung darin zu erkennen, dass anstelle einer externen Absaugung die Absaugung in den Arbeitskopf hinein integriert ist mit dem Eintritt des wenigstens einen Absaugkanals innerhalb der die Medienaustritte für das Schutzgas und das aufzuschmelzende Füge- oder Beschichtungsmaterial umgebenden Ummantelung.

Unter Erzielung der oben hinsichtlich des Verfahrens bereits geschilderten Vorteile kann in dem Arbeitskopf eine rohrförmige Zuführung für das aufzuschmelzende Füge- oder Beschichtungsmaterial münden, wobei diese zugleich jedenfalls in einem Teilabschnitt jedenfalls einen Teil des Absaugkanals bildet. Alternativ kann der Absaugkanal jedenfalls in einem Abschnitt diese zentrale rohrförmige Zuführung im Querschnitt ringförmig umgeben.

Auch hinsichtlich der Vorrichtung kann in dem Arbeitskopf wenigstens ein Schutzgaskanal gebildet sein, der mit einer geschlossenen umlaufenden schlitzförmigen Mündungsöffnung die rohrförmige Zuführung sowie die Eintrittsöffnung des Absaugkanals umgibt. Mit einer solchen Ausgestaltung kann in der oben hinsichtlich ihrer Vorteile bereits beschriebenen Weise eine Art ringförmige Schutzgasdusche, um den zentralen Bereich des Arbeitskopfes mit dem Austritt des Füge- oder Beschichtungsmaterials und dem Eintritt der Absaugung gebildet werden. Sind hier zwei umeinander herum gelegte schlitzförmige umlaufende Mündungsöffnungen vorgesehen, die zu einem inneren und einem äußeren Schutzgaskanal gehören, und ist der Austrittsquerschnitt der äußeren schlitzförmigen Mündungsöffnung geringer als derjenige der inneren schlitzförmigen Öffnung, so können die unterschiedlichen Strömungsgeschwindigkeiten des äußeren und des inneren Schutzgasaustrittes erzielt werden mit den oben zum Verfahren bereits beschriebenen Vorteilen. Selbstverständlich können auch anstelle unterschiedlich im Querschnitt bemessener Austrittsöffnungen zum Erreichen unterschiedlicher Strömungsgeschwindigkeiten auch andere Maßnahmen ergriffen werden, z.B. Beaufschlagung der unterschiedlichen Schutzgaskanäle mit unterschiedlichen Volumenströmen.

Weitere Vorteile und Merkmale der Erfindung ergeben sich aus der nachfolgenden Beschreibung eines Ausführungsbeispiels anhand der beigefügten Figuren. Dabei zeigen:
- Fig. 1: eine teilweise weggeschnittene Darstellung eines in erfindungsgemäßer Weise ausgestalteten Arbeitskopfes in Form eines Schutzgasschweiß-kopfes; und
- Fig. 2: eine Simulation der Strömungsverhältnisse im Inneren des oberhalb einer Bearbeitungsstelle angeordneten Arbeitskopfes gemäß Fig. 1 sowie in der unmittelbaren Umgebung der Bearbeitungsstelle.

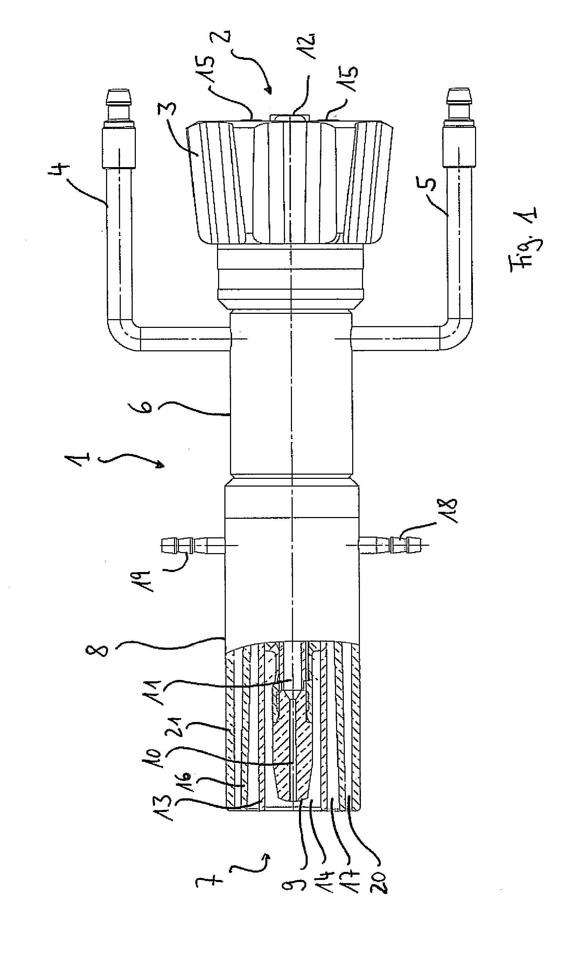

In Fig. 1 ist als ein Ausführungsbeispiel für einen in erfindungsgemäßer Weise gestalteten Arbeitskopf einer Fügevorrichtung ein Schutzgasschweißkopf 1 dargestellt. Dieser enthält zunächst eine Anschlussseite 2 mit einer Schraubkappe 3, mittels derer er an eine Halterung und Medienzuführung eines Schweißgerätes, z.B. eines Schweißroboters, angeschlossen werden kann. Über mit entsprechenden Anschlüssen versehene Kühlwasserrohrleitungen 4 und 5 kann der Schweißkopf 1 mit einer Wasserkühlung verbunden werden. Das Kühlwasser strömt dann durch die Kühlwasserrohrleitung 4 in einen Kühlmantel 6, nimmt dort Abwärme auf und verlässt das System über die Kühlwasserrohrleitung 5.

In einem zur vorderen Stirnseite 7 innen gelegenen Abschnitt 8 des Schweißkopfes 1, der hier teilweise weggeschnitten dargestellt ist, sind Austritte und Strukturen wie nachfolgend erläutert ausgebildet. Zentral im Inneren des Schweißkopfes 1 ist der vorderen Stirnseite 7, die im Einsatz über die Schweißstelle zu führen ist, zugewandt eine Kontaktspitze 9 angeordnet. In dieser ist eine Längsbohrung 10 geführt, die rückwärtig in einen zentralen Schweißdrahfikanal 11 mündet. Dieser Schweißdrahtkanal 11 erstreckt sich in bekannter Weise durch den gesamten Schweißkopf 1 und mündet an der mit 12 bezeichneten Anschlussstelle und kann dort mit einer entsprechenden Schweißdrahtzuführung der an der Anschlussseite 2 angeschlagenen Armatur verbunden werden. Durch den Schweißdrahtkanal 11 und die Längsbohrung 10 wird, gesteuert über ein hier nicht dargestelltes Drahtvorschubgerät der Vorrichtung, Schweißdraht nach- und der Schweißstelle zum Aufschmelzen und thermischen stoffschlüssigen Fügen zugeführt.

Von einer ersten inneren Wandung 13 umgeben und nach außen abgetrennt umgibt die Kontaktspitze 9 konzentrisch ein Absaugkanal 14. Dieser wird in hier nicht näher dargestellter Weise in Längsrichtung durch den Schweißkopf geführt bis hin zu auf der Anschlussseite 2 gegebenen Anschlüssen 15, über die ein Unterdruck aufgebracht und entstehendes Rauchgas abgesaugt werden kann. Der Absaugkanal 14 umgibt mit seiner Mündung unmittelbar die Kontaktspitze 9, so dass im Betrieb das dort entstehende Rauchgas direkt abgesaugt und abgeführt werden kann, ohne dass es nach außen austritt.

Eine zweite innere Wandung 16, die konzentrisch um die erste innere Wandung 13 herumgeführt ist, begrenzt einen zwischen der ersten inneren Wandung 13 und der zweiten inneren Wandung 16 gebildeten, ringförmigen inneren Schutzgaskanal 17. Durch diesen wird über die Gasanschlüsse 18 bzw. 19 zugeführtes Schutzgas zur Schweißstelle verbracht und tritt ringförmig die Kontaktspitze 9 und den Absaugkanal 14 umgebend aus einer ringschlitzartigen Mündungsöffnung aus dem inneren Schutzgaskanal 17 aus. Ein weiterer, äußerer Schutzgaskanal 20 ist zwischen der zweiten inneren Wandung 16 und einer äußeren Wandung 21 in dem Abschnitt 8 ausgebildet. Durch diesen wird durch die Gasanschlüsse 18 bzw. 19 zugeführtes Schutzgas hindurchgeleitet, es tritt an einer ringschlitzförmigen Öffnung in Richtung der Stirnseite 7 hin aus. Zu erkennen ist hier, dass der Abstand zwischen der äußeren Wandung 21 und der zweiten inneren Wandung 16 im Bereich der Mündung des äußeren Schutzgaskanals 20 geringer ist als der Abstand der inneren Wandung 16 zu der inneren Wandung 13 im Bereich der Mündung des inneren Schutzgaskanals 17, mit anderen Worten die Querschnittsfläche des Austrittes des inneren Schutzgaskanals 17 größer ist als die Querschnittsfläche des Austrittes des äußeren Schutzgaskanals 20. Durch diese Konfiguration wird erreicht, dass im Betrieb das Schutzgas aus dem äußeren Schufizgaskanal 20 mit einer höheren Austrittsgeschwindigkeit strömt als aus dem inneren Schutzgaskanal 17. Dadurch wird im Betrieb eine auch entlang der Werkstückoberfläche des zu fügenden Werkstückes abdichtende Schutzgasglocke gebildet, die den zentralen Bereich der Kontaktspitze 9 und des Eintritts in den Absaugkanal 14 umgibt und ein Austreten von über den Absaugkanal 14 abgesaugtem Rauchgas nach außen ebenso verhindert wie ein Eindringen der äußeren Atmosphäre in den genannten zentralen Bereich. Aus dem inneren Schutzgaskanal 17 tritt Schutzgas mit geringerer Strömungsgeschwindigkeit aus, so dass ein Eindrücken des Schutzgases in das Innere, insbesondere in den Absaugkanal 14 und in den Bereich der Kontaktspitze 9 jedenfalls in einem Übermaß vermieden und somit eine die Absaugung des entstehenden Rauchgases behindernde Blockade verhindert wird.

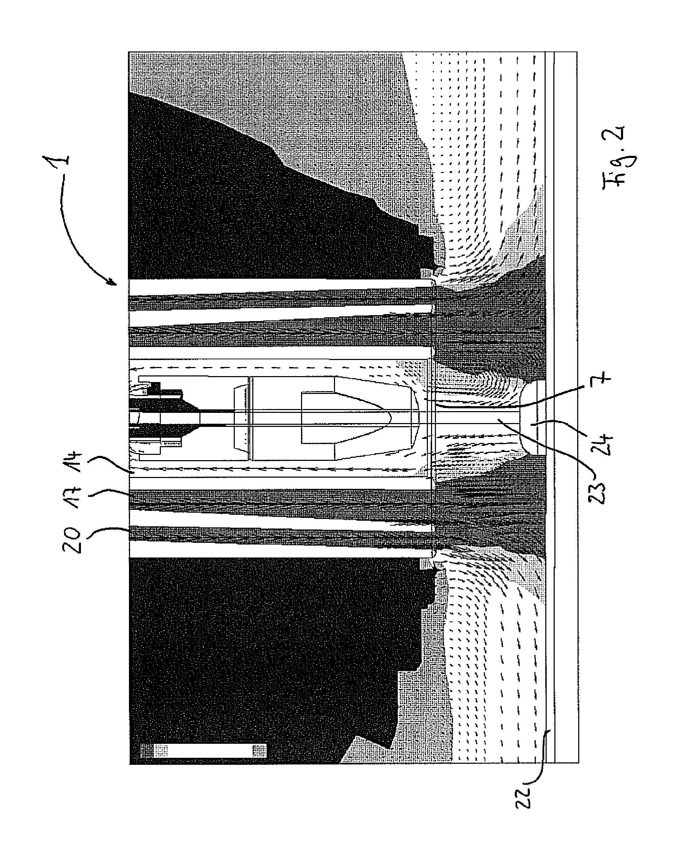

In Fig. 2 ist in einer Querschnittsdarstellung eine Simulation der Strömungsverhältnisse im Bereich der vorderen Stirnseite 7 des Schweißkopfes 1 im Schweißbetrieb dargestellt. Zu erkennen ist, wie Schutzgas durch den inneren Schutzgaskanal 17 und den äußeren Schutzgaskanal 20 hindurch in Richtung der Oberfläche des Werkstückes 22 strömt. Durch die unterschiedlichen Strömungsgeschwindigkeiten des über die beiden Schutzgaskanäle zugeführten Schutzgases (schnelle Ausströmgeschwindigkeit aus dem äußeren Schutzgaskanal 20 und langsamere Ausströmgeschwindigkeit aus dem inneren Schutzgaskanal 17) ergibt sich in Zusammenwirkung mit der durch die Absaugung an dem Absaugkanal 14 erzeugte Rückströmung von Rauchgas die gezeigte Verteilung der Schutzgas- und Rauchgasströmung. Das Schutzgas strömt im Wesentlichen auf die Oberfläche 22 des Werkstückes zu und von dort nach außen ab und bildet so eine die Atmosphäre außerhalb gut abdichtende Schutzgasglocke. Im Zentrum der vorderen Stirnseite 7 des Schweißkopfes 1, wo der Schweißdraht 23 aufgeschmolzen und zur Bildung der Schweißnaht 24 auf das Werkstück aufgebracht wird, strömt kaum Schutzgas. Vielmehr ist die dortige Atmosphäre durch das entstehende Rauchgas bestimmt, sie ist überwiegend schutzgasfrei. Das entstehende Rauchgas wird getrieben bzw. blockiert durch den durch das Ausströmen des Schutzgases aus dem inneren Schutzgaskanal 27 gleichermaßen gebildeten Schutzgasvorhang zurückgehalten und damit sicher dem Absaugkanal 14 zugeführt. Das Rauchgas wird insoweit sicher abgeführt, ohne dass dieses die Kernzone der Schweißstelle nach außen verlässt und in die umgebende Atmosphäre eindringt. Darüber hinaus wird durch die Absaugung des Rauchgases unmittelbar an der Schweißstelle und die Anlegung eines Unterdruckes erreicht, dass entstehendes Rauchgas schnell und ungehindert abdampfen bzw. abgasen kann und somit nicht zur Porenbildung und Spritzerbildung führt. Neben der vollständigen und rückhaltlosen Absagung des Rauchgases ergibt sich mithin auch eine Verbesserung der Eigenschaften der Schweißnaht, die porenärmer und damit fester und zäher sowie in ihrer Oberfläche sauberer ist.

### Bezugszeichenliste

- 1: Schweißkopf
- 2: Anschlussseite
- 3: Schraubkappe
- 4: Kühlwasserrohrleitung
- 5: Kühlwasserrohrleitung
- 6: Kühlmantel
- 7: vordere Stirnseite
- 8: Abschnitt
- 9: Kontaktspitze
- 10: Längsbohrung
- 11: Schweißdrahtkanal
- 12: Anschlussstelle
- 13: innere Wandung
- 14: Absaugkanal
- 15: Anschluss
- 16: innere Wandung
- 17: innerer Schutzgaskanal
- 18: Gasanschluss
- 19: Gasanschluss
- 20: äußerer Schutzgaskanal
- 21: äußere Wandung
- 22: Werkstück
- 23: Schweißdraht
- 24: Schweißnaht

## Patentansprüche

1. Verfahren zum stoffschlüssigen, thermischen Fügen oder Beschichten von Werkstücken unter Schutzgaseintrag mittels eines einen Arbeitskopf aufweisenden Füge- oder Beschichtungsgerätes, wobei über eine rohrförmige Zuführung, die in dem Arbeitskopf mündet, in den Arbeitskopf ein aufzuschmelzendes Füge- bzw. Beschichtungsmaterial zugeführt und im Bereich des Arbeitskopfes durch eine Lichtbogenentladung aufgeschmolzen und in eine Fügenaht ein- oder auf eine Werkstückoberfläche aufgebracht wird und wobei während des Bearbeitungsvorganges entstehendes Rauchgas abgesaugt wird, **dadurch gekennzeichnet, dass** die Absaugung des Rauchgases durch den Arbeitskopf erfolgt, über wenigstens einen mit einem Eintritt in dem Arbeitskopf liegenden Absaugkanal.

2. Verfahren nach Anspruch 1, **dadurch gekennzeichnet, dass** die rohrförmige Zuführung zumindest in einem Teilabschnitt als Absaugkanal verwendet wird.

3. Verfahren nach einem der vorhergehenden Ansprüche, **dadurch gekennzeichnet, dass** die Absaugung des Rauchgases über einen Absaugkanal erfolgt, der jedenfalls teilweise konzentrisch zu der rohrförmigen Zuführung um dieser herum gebildet ist.

4. Verfahren nach einem der vorhergehenden Ansprüche, **dadurch gekennzeichnet, dass** das Schutzgas über wenigstens einen in dem Arbeitskopf mündenden Schutzgaskanal zugeführt wird, dessen Mündungsöffnung sich geschlossen sowohl um die Mündung der rohrförmigen Zuführung als auch um den Eintritt des Absaugkanals erstreckt.

5. Verfahren nach Anspruch 4, **dadurch gekennzeichnet, dass** das Schutzgas über zwei Schutzgaskanäle zugeführt wird, von denen sich ein innerer Schutzgaskanal mit seiner Mündungsöffnung geschlossen um die Mündung der rohrförmigen Zuführung und um den Eintritt des Absaugkanals herum und ein äußerer Schutzgaskanal mit seiner Mündungsöffnung geschlossen um die Mündungsöffnung des inneren Schutzgaskanals herum erstreckt, wobei das Schutzgas aus der Mündungsöffnung des äußeren Schutzgaskanals mit einer höheren Strömungsgeschwindigkeit austritt als das Schutzgas aus der Mündungsöffnung des inneren Schutzgaskanals.

6. Vorrichtung zum stoffschlüssigen, thermischen Fügen oder Beschichten von Werkstücken unter Schutzgaseintrag mit einer jedenfalls die Medien Schutzgas und ein aufzuschmelzendes Füge- bzw. Beschichtungsmaterial (23) zuführenden Medienversorgung und einem Arbeitskopf (1), an dem die Medien austreten und der Bearbeitungsvorgang vollzogen wird und der eine die Austrittsöffnungen der Medien umgebende Ummantelung (8) aufweist, sowie einer Absaugung zum Absaugen von während des Bearbeitungsvorganges entstehendem Rauchgas, **dadurch gekennzeichnet, dass** in dem Arbeitskopf (1) wenigstens ein an die Absaugung angeschlossener Absaugkanal (14) mit mindestens einer innerhalb der Ummantelung (8) angeordneten Eintrittsöffnung ausgebildet ist.

7. Vorrichtung nach Anspruch 6, **dadurch gekennzeichnet, dass** in dem Arbeitskopf (1) eine rohrförmige Zuführung (9) für das aufzuschmelzendes Füge- bzw. Beschichtungsmaterial (23) mündet, wobei die rohrförmig Zuführung zugleich jedenfalls in einem Teilabschnitt jedenfalls einen Teil des Absaugkanals bildet.

8. Vorrichtung nach Anspruch 6, **dadurch gekennzeichnet, dass** in dem Arbeitskopf (1) eine zentrale rohrförmige Zuführung (9) für das aufzuschmelzendes Füge- bzw. Beschichtungsmaterial mündet, und dass der Absaugkanal (14) jedenfalls in einem Abschnitt diese zentrale rohrförmige Zuführung (9) im Querschnitt ringförmig umgibt.

9. Vorrichtung nach einem der Ansprüche 6 bis 8, **dadurch gekennzeichnet, dass** in dem Arbeitskopf (1) wenigstens ein Schutzgaskanal (17, 20) gebildet ist, der mit einer geschlossenen umlaufenden schlitzförmigen Mündungsöffnung die rohrförmige Zuführung (9) sowie die Eintrittsöffnung des Absaugkanals (14) umgibt.

10. Vorrichtung nach Anspruch 9, **dadurch gekennzeichnet, dass** in dem Arbeitskopf (1) zwei Schutzgaskanäle (17, 20) gebildet sind, von denen ein erster innerer Schutzgaskanal (17) mit seiner geschlossen umlaufenden schlitzförmigen Mündungsöffnung die rohrförmige Zuführung (9) sowie die Eintrittsöffnung des Absaugkanals (14) umgibt und ein zweiter äußerer Schutzgaskanal (20) mit seiner geschlossen umlaufenden schlitzförmigen Mündungsöffnung die Mündungsöffnung des ersten Schutzgaskanals (17) umgibt, und dass der Austrittsquerschnitt der Mündungsöffnung des zweiten äußeren Schutzgaskanals (20) kleiner ist als der Austrittsquerschnitt der Mündungsöffnung des ersten inneren Schutzgaskanals (17).
